# EUROPÄISCHE PATENTSCHRIFT

(11) **EP 3 108 136 B1**
(45) Veröffentlichungstag und Bekanntmachung des Hinweises auf die Patenterteilung: **21.02.2018**
(21) Anmeldenummer: 14816323.1
(22) Anmeldetag: 23.12.2014
(51) Int. Cl.: F02M 59/44, F16J 15/32, B29C 45/00, B29C 45/34, F16J 15/16, B29L 31/26

(54) **KOLBEN-KRAFTSTOFFPUMPE FÜR EINE BRENNKRAFTMASCHINE**
PISTON FUEL PUMP FOR AN INTERNAL COMBUSTION ENGINE
POMPE À ESSENCE À PISTON POUR MOTEUR À COMBUSTION INTERNE

(30) Priorität: 17.02.2014 DE 102014202795
(43) Veröffentlichungstag der Anmeldung: 28.12.2016
(73) Patentinhaber: Robert Bosch GmbH, 70442 Stuttgart (DE)
(72) Erfinder: ALBRECHT, Oliver, 74321 Bietigheim-Bissingen (DE); STRITZEL, Soeren, 71032 Boeblingen (DE); SCHENK, Tobias, 73614 Schorndorf (DE); JAHN, Heiko, 71732 Tamm (DE)
(86) Internationale Anmeldenummer: PCT/EP2014/079148
(87) Internationale Veröffentlichungsnummer: WO 2015/120944

(56) Entgegenhaltungen:
- EP-A1- 1 967 773
- EP-A1- 2 278 195
- WO-A1-98/04853
- DE-A1- 19 618 013
- DE-A1-102008 043 846
- JP-A- H1 172 061
- JP-A- 2002 018 912

## Beschreibung

### Stand der Technik

Die Erfindung betrifft eine Kolben-Kraftstoffpumpe nach dem Oberbegriff des Anspruchs 1.
Vom Markt bekannt sind Kraftstoffsysteme von Brennkraftmaschinen, bei denen der Kraftstoff aus einem Kraftstofftank mittels einer mechanisch angetriebenen Kolben-Kraftstoffpumpe unter hohem Druck in ein Kraftstoffrail gefördert wird und von dort aus über Injektoren in Brennräume einer Brennkraftmaschine gelangt.
Beispielsweise bei der aus der DE 10 2004 063 074 A1 bekannten Kolben-Kraftstoffpumpe ist ein verschiebbar gelagerter Pumpenkolben vorgesehen, der Kraftstoff in einem Förderraum der Kolben-Kraftstoffpumpe verdichtet. Der Pumpenkolben ist in einer Kolbenbuchse durch eine enge Passung gleitend und mit einem geringen Dichtspalt geführt. Die Kolbenbuchse muss zum Abstützen und Abdichten über eine Spaltdichtung eine gewisse Länge aufweisen und gegebenenfalls große Querkräfte aufnehmen. Daher wird die Kolbenbuchse oft aus Stahl hergestellt. Aufgrund hoher Toleranzanforderungen wird darüber hinaus eine sogenannte "Kolbenpaarung" verwendet, d.h. jedem Pumpengehäuse wird ein bestimmter Kolben zugeordnet. Ferner muss der Zylinder im Pumpengehäuse aufwendig gehont werden. Es besteht ein Bedürfnis nach einer Kraftstoff-Kolbenpumpe, deren Herstellung weniger aufwendig ist. Eine weitere Kolben-Kraftstoffpumpe ist aus JP H11 72061 bekannt.

### Offenbarung der Erfindung

Das der vorliegenden Erfindung zu Grunde liegende Problem wird durch eine Kraftstoff-Kolbenpumpe mit den Merkmalen des Anspruchs 1 gelöst. Vorteilhafte Weiterbildungen der Erfindung sind in Unteransprüchen genannt. Weitere für die Erfindung wichtige Merkmale finden sich darüber hinaus in der nachfolgenden Beschreibung und in der Zeichnung.

Die erfindungsgemäße Kolben- Kraftstoffpumpe hat den Vorteil, dass eine Kolbenbuchse und die entsprechende hochgenaue Passung des Kolbens in der Kolbenbuchse nicht mehr zwingend erforderlich ist und somit erhebliche Kosten eingespart werden können. Stattdessen weist die Kolben-Kraftstoffpumpe eine am Umfang des Pumpenkolbens angeordnete Dichtung auf.

Erfindungsgemäß weist diese Dichtung eine ringförmige Grundstruktur auf, insbesondere läuft sie in Umfangsrichtung einmal um den Pumpenkolben um. Insofern kann auf eine Achse des Kolbens, also auf eine axiale Richtung, nachfolgend auch zur Kennzeichnung einer ausgezeichnete Richtung der Dichtung Bezug genommen werden

Bei der Kraftstoff-Kolbenpumpe handelt es sich insbesondere um eine Pumpe, die ein Pumpengehäuse aufweist, in der ein von dem Pumpenkolben begrenzter Arbeitsraum ausgebildet ist. Die Verdichtung des Kraftstoffs erfolgt insbesondere in diesem Arbeitsraum, insbesondere durch eine den Arbeitsraum verkleinernde axiale Bewegung des Pumpenkolbens. Es erfolgt insbesondere eine Verdichtung des Kraftstoff im Arbeitsraum auf ein hohes Druckniveau, beispielsweise auf 100bar bis 600bar.

Die erfindungsgemäße Dichtung ist insbesondere zwischen dem Arbeitsraum und einem Niederdruckbereich der Pumpe ausgebildet. Der Druck im Niederdruckbereich ist geringer als das hohe Druckniveau, das im Arbeitsraum der Pumpe generiert wird. Das Druckniveau im Niederdruckbereich kann beispielsweise bei 3bar bis 10bar liegen und durch eine separate Vorpumpe generiert sein.

Der Arbeitsraum ist insbesondere über ein Auslassventil mit einem Pumpenauslass verbunden und insbesondere über ein elektrisch ansteuerbares Einlassventil mit einem Pumpeneinlass verbunden. Das elektrisch ansteuerbares Einlassventil kann insbesondere als Mengensteuerventil ausgebildet sein. Optional kann zusätzlich zwischen Pumpeneinlass und Arbeitsraum ferner eine Dämpfungseinrichtung zur Dämpfung von Pulsationen im Niederdruckbereich der Pumpe vorgesehen sein.

Die Dämpfungseinrichtung zur Dämpfung von Pulsationen im Niederdruckbereich kann beispielsweise ein zwischen zwei Membranen eingeschlossenes Gasvolumen umfassen, Details hinsichtlich der Dämpfungseinrichtung können wie in der DE10327408A1 gezeigt ausgebildet sein.

Ein weiteres zwischen Pumpenauslass und Arbeitsraum angeordnetes Ventil, das antiparallel zum Auslassventil angeordnet ist, kann vorgesehen sein und insbesondere als Druckbegrenzungsventil für einen mit der Pumpe verbindbaren Hochdruckspeicher wirken.

Vorzugsweise sind das Auslassventil und/oder das Einlassventil und/oder das Druckbegrenzungsventil ortsfest zu dem Pumpengehäuse und insofern auch ortsfest zu dem Pumpenzylinder fixiert. Eine Fixierung dieser Komponenten an dem Pumpenkolben scheidet insofern insbesondere aus. Es ergibt sich der Vorteil, dass die Masse des Pumpenkolbens gering ist und somit die Dynamik bzw. Leichtgängigkeit der Pumpe verbessert ist.

Vorzugsweise ist zusätzlich oder alternativ der Pumpenkolben als Vollkörper ausgebildet, sodass er den bei der Kraftstoffeinspritzung, insbesondere bei der Benzindirekteinspritzung, hohen wirkenden Drücken ohne Verformung standhalten kann. Eine Durchströmbarkeit des Pumpenkolbens in Längsrichtung scheidet insofern aus.

Weitere Details der Anordnung von Arbeitsraum, Auslassventil und Druckregelventil zueinander und im Pumpenkörper können beispielsweise wie in der DE102004013307A1 gezeigt ausgebildet sein.

Der Pumpenzylinder kann in einer im Pumpenkörper fixierten Buchse ausgebildet sein. Alternativ kann der Pumpenzylinder auch unmittelbar im Pumpenkörper vorgesehen sein.

Der Pumpenkörper, der Pumpenkolben, der Pumpenzylinder und/oder alle Pumpenteile, die mit dem Kraftstoff in Berührung kommen, bestehen bevorzugt lediglich aus Stählen und aus Kunstoffen, sodass im Ergebnis eine hohe Beständigkeit auch gegenüber ethanolhaltigen Kraftstoffen und/oder anderen aggressiven Kraftstoffen gegeben ist.
Erfindungsgemäß ist die Dichtung mittels Spritzguss hergestellt. Das Spritzgussverfahren, das auch als Spritzgießen bezeichnet wird, ist dem Fachmann insbesondere zur Herstellung von Werkstücken aus Kunstoffen, wie beispielsweise aus Thermoplasten, grundsätzlich bekannt.
Eine Besonderheit dieses Verfahrens besteht insbesondere darin, dass eine verflüssigte Spritzgussmasse durch eine Anspritzöffnung oder durch mehrere Anspritzöffnungen in eine Spritzform eingebracht wird. Die zunächst in der Spritzform vorhandene Luft entweicht dabei insbesondere über eine separate Entlüftungsöffnung oder über mehrere separate Entlüftungsöffnungen. Nach Abkühlung erstarrt das hergestellte Werkstück und kann der Spritzgussform entnommen werden. Insbesondere weist das so hergestellte Werkstück in dem Bereich, der in der Spritzform einer Anspritzöffnung oder einer Entlüftungsöffnungen benachbart lag, Abweichungen von der gewünschten Form auf. Insofern sind insbesondere Anspritzpunkte und Entlüftungspunkte an Werkstücken festzustellen, die auch als Anspritznippel bzw. Entlüftungsnippel bezeichnet werden. Sie haben insbesondere die Form einer lokalen, beispielsweise ringförmigen Unebenheit oder eines ringförmigen Grates; auch insgesamt erhabene Geometrien, die wie kleine Warzen geformt sein können, können auftreten. Auch kleine Ausnehmungen können insbesondere im Bereich der Entlüftungspunkte auftreten.
Der Erfindung liegt die Beobachtung zugrunde, dass bei Dichtungen für Kolben-Kraftstoffpumpen derartige Anspritz- bzw. Entlüftungspunkte entweder aufwendig durch Nacharbeit entfernt werden müssen oder für die Dichtfunktion bzw. für die Montier- und/oder Handhabbarkeit der Dichtung nachteilhaft sein können. Erfindungsgemäß wird dieses Problem dadurch gelöst, dass die Dichtung mittels Spritzguss mit axialer Anspritzrichtung hergestellt ist.

Hierbei kommen mehrere Anspritzpunkte auf einer axial ausgerichteten Fläche der Dichtung und somit außerhalb des Dichtbereichs der Dichtung zu liegen. Erfindungsgemäß ist ein Entlüftungspunkt oder können mehrere Entlüftungspunkte auf einer axial ausgerichteten Fläche der Dichtung angeordnet sein. Erfindungsgemäß ist der Entlüftungspunkt oder sind die Entlüftungspunkte auf einer axial ausgerichteten Fläche der Dichtung angeordnet, die der axialen Fläche, auf der der Anspritzpunkt liegt oder auf der die Anspritzpunkte liegen, in axialer Richtung gegenüber liegt.
Mit den gleichen Wirkungen und Vorteilen wie oben genannt, können zusätzlich oder alternativ zumindest ein Anspritzpunkt und zumindest ein Entlüftungspunkt zueinander in axialer Richtung versetzt angeordnet sein.
Insbesondere bei der Anwendung der Kolben-Kraftstoffpumpe im Bereich der Benzindirekteinspritzung ist die Dichtung hohen mechanischen Belastungen ausgesetzt. Es sind daher Dichtungen aus thermoplastischen Kunststoffen bevorzugt, die faserverstärkt sind. Fasern aus Glas und/oder Carbon sind bevorzugt. Faserverstärkte thermoplastische Materialien mit mittleren Faserlängen von mindestens 100µm sind bevorzugt. Zusätzlich oder alternativ ist bevorzugt, dass der Faseranteil im Bereich von 5 Gew% bis 30 Gew% liegt. Die Verwendung von faserverstärktem PEEK oder faserverstärktem PA ist bevorzugt, beispielsweise PEEK 150CA30 oder PA66CF20.
Faserverstärkte thermoplastische Materialien weisen in der Regel in Abhängigkeit von der Faserausrichtung anisotrope Materialeigenschaften, wie beispielsweise anisotrope Elastizität auf. Die Dichtung der erfindungsgemäßen Kolben-Kraftstoffpumpe ist jedoch sowohl in axialer, als auch in radialer Richtung stark beansprucht, insofern sind anisotrope Materialeigenschaften der Dichtung unerwünscht.
Vorliegend können anisotrope Materialeigenschaften der Dichtung bei der Verwendung von faserverstärkten thermoplastischen Materialien dadurch vermieden werden, dass eine geordnete Ausrichtung der Fasern vermieden wird.

Insofern besteht eine weitere unabhängige Erfindung in einer Kolben-Kraftstoffpumpe für eine Brennkraftmaschine mit einem Pumpenzylinder und einem im Pumpenzylinder axial verschiebbaren Pumpenkolben, die dadurch gekennzeichnet ist, dass die Kolben-Kraftstoffpumpe eine am Umfang des Pumpenkolbens angeordnete Dichtung mit ringförmiger Grundstruktur aus einem faserverstärkten thermoplastischen Material aufweist, in dem die Ausrichtung der Fasern ungeordnet ist. Weiterbildungen im Rahmen der vorliegend, insbesondere in den Ansprüchen, der Beschreibung und der Zeichnung, offenbarten Merkmale sind stets möglich. Unter einer ungeordneten oder nicht geordneten Ausrichtung der Fasern in einem faserverstärkten thermoplastischen Material wird verstanden, dass innerhalb der Dichtung weder global noch lokal eine signifikante Vorzugsrichtung der Faserausrichtung vorliegt. Die Faserausrichtung kann insbesondere chaotisch ungeordnet vorliegen.

Es ist hingegen auch bekannt, dass bei Spritzguss von faserverstärkten thermoplastischen Materialien die Tendenz besteht, dass sich die Fasern lokal oder sogar global zueinander ausrichten, entsprechend der beim Fließen auftretenden Wechselwirkungen der Fasern untereinander und mit der Spritzgussform. Die Vermeidung einer solchen Ausrichtung ist somit insbesondere bei langen Fasern (mittlere Länge größer 100µm) eine Herausforderung.
Vorliegend kann zu diesem Zweck vorgesehen sein, dass der zumindest eine Anspritzpunkt und der zumindest eine Entlüftungspunkt in Umfangsrichtung zueinander versetzt angeordnet sind. Es kommt somit zu einer starken Durchmischung und Verwirbelung des verflüssigten Spritzgussmaterials in der Spritzgussform. Erfindungsgemäß ist zu diesem Zweck vorgesehen, dass mehrere Anspritzpunkte auf einer axialen Seite der Dichtung vorgesehen sind und dass zumindest ein Entlüftungspunkt auf der gegenüberliegenden axialen Seite der Dichtung in Umfangsrichtung zwischen den Anspritzpunkten vorgesehen ist. Es kommt somit zu einer noch besseren Durchmischung des verflüssigten Spritzgussmaterials in der Spritzgussform.

Alternativ oder zusätzlich kann zu diesem Zweck vorgesehen sein, dass mehrere Entlüftungspunkte auf der gegenüberliegenden axialen Seite der Dichtung vorgesehen sind und dass die Entlüftungspunkte zu den Anspritzpunkten stets in Umfangsrichtung versetzt, insbesondere in Umfangsrichtung mittig, angeordnet sind. Es kommt somit zu einer nochmals verbesserten Durchmischung des verflüssigten Spritzgussmaterials in der Spritzgussform.

Nachfolgend werden Beispiele der vorliegenden Erfindung unter Bezugnahme auf die beiliegenden Zeichnungen näher erläutert.

In den Zeichnungen zeigen:
- Figur 1: eine schematische Darstellung eines Kraftstoffsystems einer Brennkraftmaschine mit einem Ausschnitt einer erfindungsgemäßen Kolben-Kraftstoffpumpe
- Figur 2: eine vergrößerte Schnittdarstellung des Ausschnitts der Kolben-Kraftstoffpumpe gemäß Figur 1
- Figur 3: eine alternative Ausführungsform der Kolben-Kraftstoffpumpe
- Figur 4: eine weitere alternative Ausführungsform der Kolben-Kraftstoffpumpe.
Die Figuren 5 und 6 zeigt die Dichtung axial von oben bzw. unten.

In der Figur 7 ist ein axialer Endbereich der Dichtung vergrößert dargestellt.

### Ausführungsformen

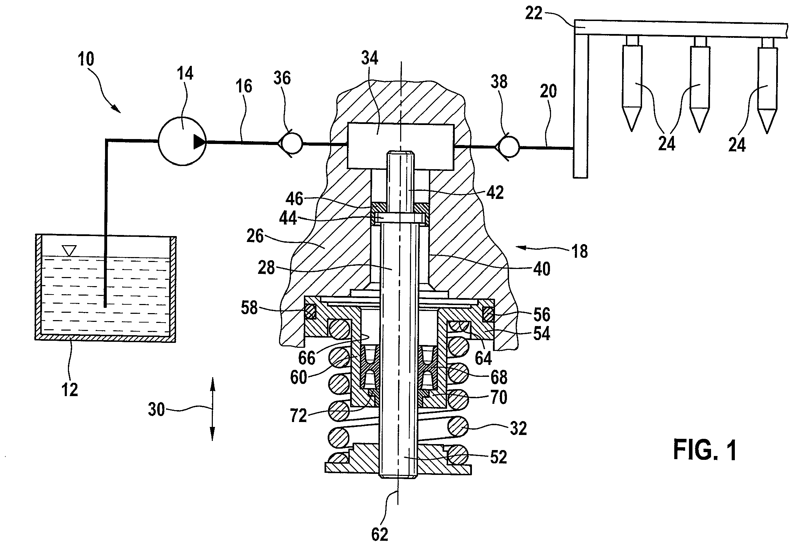

Ein Kraftstoffsystem einer Brennkraftmaschine trägt in Figur 1 insgesamt das Bezugszeichen 10. Es umfasst einen Kraftstoffbehälter 12, aus dem eine elektrische Vorförderpumpe 14 den Kraftstoff in eine Niederdruckleitung 16 fördert. Diese führt zu einer Hochdruckpumpe in Form einer Kolben-Kraftstoffpumpe 18. Von dieser führt eine Hochdruckleitung 20 zu einem Kraftstoffrail 22. An dieses sind mehrere Injektoren 24 angeschlossen, die den Kraftstoff direkt in ihnen jeweils zugeordnete Brennräume (nicht dargestellt) einspritzen.

Die Kolben-Kraftstoffpumpe 18 umfasst ein nur bereichsweise angedeutetes Pumpengehäuse 26, in dem ein Pumpenkolben 28 verschiebbar geführt bzw. gelagert ist. Dieser kann von einem nicht dargestellten Nockenantrieb in eine Hin- und Herbewegung versetzt werden, was durch einen seitlich gezeichneten Doppelpfeil 30 angedeutet ist. Der Pumpenkolben 28 wird von einer Schraubenfeder 32 in einen in Figur 1 unteren Totpunkt beaufschlagt. Der Pumpenkolben 28 und das Pumpengehäuse 26 begrenzen einen Förderraum 34. Dieser Förderraum 34 ist über ein Einlassventil 36 mit der Niederdruckleitung 16 verbindbar. Ferner ist der Förderraum 34 über ein Auslassventil 38 mit der Hochdruckleitung 20 verbindbar.

Sowohl das Einlassventil 36 als auch das Auslassventil 38 sind als Rückschlagventile ausgeführt. Nicht dargestellt, aber möglich ist dabei eine Ausführung des Einlassventils 36 als Mengensteuerventil. Bei einem solchen kann das Einlassventil 36 während eines Förderhubs des Pumpenkolbens 28 zwangsweise geöffnet werden, so dass der Kraftstoff nicht in das Kraftstoffrail 22, sondern zurück in die Niederdruckleitung 16 gefördert wird. Hierdurch kann die von der Kolben-Kraftstoffpumpe 18 in das Kraftstoffrail 22 geförderte Kraftstoffmenge eingestellt werden.

Der Pumpenkolben 28 ist in einem Pumpenzylinder 40 geführt, der insoweit Teil des Pumpengehäuses 26 ist. Der Pumpenkolben 28 weist an einem dem Förderraum 34 zugewandten Ende einen in Figur 1 oberen Endabschnitt 42 auf. In der Umgebung dieses oberen Endabschnitts 42 weist der Pumpenkolben 28 ferner einen kreisringartigen Absatz 44 in der Art eines radial abstehenden umlaufenden Kragens auf. Eine Dichtung 46 kommt an dem Pumpenkolben 28 bzw. an dem Absatz 44 zur Anlage.

An seinem dem Förderraum 34 abgewandten Ende weist der Pumpenkolben 28 ferner einen in Figur 1 unteren Endabschnitt 52 auf. In der Umgebung dieses unteren Endabschnitts 52 ist eine Führungshülse 54 am Pumpengehäuse 26 fest angeordnet. Zwischen der Führungshülse 54 und dem Pumpengehäuse 26 ist eine O-Ring-Dichtung 56 in einer Nut 58 vorgesehen. Die Führungshülse 54 weist einen Zylinderabschnitt 60 auf, der sich koaxial zum Pumpenkolben28 erstreckt und durch welchen die Schraubenfeder 32 geführt ist. Die Schraubenfeder 32 taucht entlang einer Kolbenlängsachse 62 zumindest abschnittsweise in eine Federaufnahmenut 64 der Führungshülse 54 ein, wo sie sich gegen die Führungshülse 54 axial abstützt.

Die Führungshülse 54 weist ferner im Inneren einen kreiszylindrischen Aufnahmeabschnitt 66 auf, der im Wesentlichen durch die innere Umfangswand des Zylinderabschnitts 60 gebildet wird. In diesem Aufnahmeabschnitt 66 ist ein ringförmiges Dichtelement 68 relativ zum Pumpengehäuse 26 ortsfest angeordnet, wobei das Dichtelement 68 einen H-förmigen Querschnitt hat. In einem sich am abragenden Ende des Zylinderabschnitts nach radial einwärts erstreckenden Kragenabschnitt 70 ist ferner ein Führungselement 72 ebenfalls relativ zum Pumpengehäuse 26 ortsfest angeordnet. Dieses somit in axialer Richtung des Pumpenkolbens 28 gesehen von der Dichtung 46 deutlich beabstandete Führungselement 72 stellt zusammen der Dichtung 46 die Führung bzw. Zweipunktlagerung des Pumpenkolbens 28 bereit.

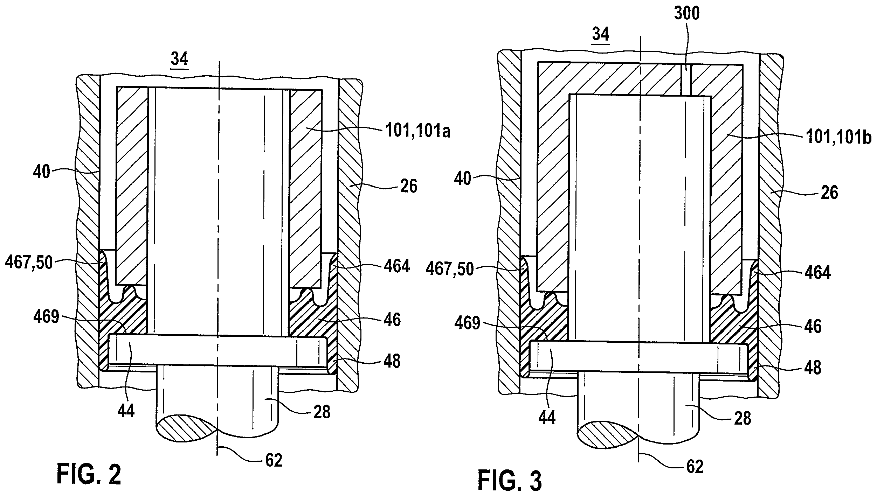

Die Ausgestaltung des Bereichs der Dichtung 46 und ihrer Montage ist vorliegend von besonderer Bedeutung. Auf diese Aspekte wird daher unter Bezugnahme auf die nachfolgenden Figuren 2 - 7 im Detail eingegangen.

Figur 2 zeigt den Bereich der Dichtung 46 der Kolben-Kraftstoffpumpe 18. In einem in Figur 2 unteren Bereich ist die Dichtung 46 soweit über den Absatz 44 des Pumpenkolbens 28 geschoben, dass sie an einer an ihr ausgebildeten Schulter 469 zur axialen Anlage an dem Absatz 44 kommt. Insbesondere der radial außerhalb von der äußeren Mantelfläche des Absatzes 44 vorhandene Materialbereich der Dichtung 46 bildet einen Lager- bzw. Führungsbereich 48, durch den der Pumpenkolben 28 gleitend im Pumpenzylinder 40 geführt und radial gelagert ist.

Der Führungsbereich 48 weist von einer inneren Umfangswand des Pumpenzylinders 40 einen in den Figuren nicht erkennbaren Abstand von etwa 2/100 mm auf. In axialer Richtung, das heißt entlang der Kolbenlängsachse 62, erstreckt sich zum Förderraum 34 hin im Anschluss an den Führungsbereich 48 der als Dichtlippe 467 ausgebildete Abdichtbereich 50. Die Dichtlippe 467 erstreckt sich dabei als an den Führungsbereich 48 angeformter und nach radial außen elastisch vorgespanntem Rohrabschnitt im Wesentlichen koaxial zum Pumpenkolben 28. Die Dichtlippe 467 liegt an der inneren Umfangswand des Pumpenzylinders 40 an. Der Führungsbereich 48 und der Abdichtbereich 50 sind in diesem Beispiel einteilig ausgebildet.

Auf den Pumpenkolben 28 ist eine Kappe 101 axial aufgeschoben, die mit der Dichtung 46 radial einwärts der Dichtlippe 467 und arbeitsraumseitig der Schulter 469 zur Anlage kommt. Die Kappe 101 ist durch radiale Pressung auf dem Pumpenkolben 28 festgesetzt und übt eine axial wirkende Kraft auf die Dichtung 46 aus. Die zwischen der Kappe 101 und dem Absatz 44 des Pumpenkolbens 28 angeordnete Dichtung 46 steht somit unter einer axialen Vorspannung.

Die Kappe 101 ist in diesem Beispiel als Hülse 101a ausgebildet, das heißt sie hat die Gestalt eines zweiseitig offenen Rings oder Rohrabschnitts. Die Hülse 101a ist vollständig auf den Pumpenkolben 28 aufgeschoben und schließt mit diesem arbeitsraumseitig bündig ab. Alternativ wäre gleichwohl auch ein noch weiteres Aufschieben der Hülse 101a auf den Pumpenkolben 28 bzw. ein arbeitsraumseitiges Überstehen der Hülse 101a grundsätzlich möglich und gegebenenfalls praktikabel.

Eine Alternative zur Ausbildung der Kappe 101 als Hülse 101a ist in der Figur 3 gezeigt. Hierbei ist die Kappe als Becher 101b ausgebildet. Der Becher 101b weist einen Becherboden und eine Becherwand auf und ist mit seinem offenen Ende voran auf den Pumpenkolben 28 aufgeschoben.

In dem in der Figur 3 dargestellten Beispiel ist der Becher 101b vollständig auf den Pumpenkolben 28 aufgeschoben. Insofern kommt sein Boden an der Stirnseite des Kolbens zur Anlage.

In diesem Beispiel weist der Becherboden in Schnittebene der Figur 3 ein kleines Loch 300 auf, durch das Luft beim Aufschieben des Bechers 101b auf den Pumpenkolben 28 aus dem Becher entweichen kann.

Die Kappe 101 kann grundsätzlich, insbesondere in den Ausführungsformen als Hülse 101a oder als Becher 101b, als Tiefziehteil, zum Beispiel aus Stahl hergestellt sein. Bevorzugt besteht die Kappe 101 aus einem Material, dessen Wärmeausdehnungskoeffizient mit dem des Pumpenkolbens 28 übereinstimmt oder annähernd übereinstimmt. Die Kappe 101 kann beispielsweise aus dem gleichen Material wie der Pumpenkolben 28 bestehen. Die Kappe 101 kann ferner beispielsweise mit einer Wandstärke von 1 mm ausgeführt sein.

In den vorangehenden Beispielen ist die Dichtung 46 axial zwischen der Kappe 101 und einem an dem Pumpenkolben 28 einstückig ausgebildeten Absatz 44 ausgebildet. Grundsätzlich ist die Einstückigkeit nicht zwingend erforderlich. Eine fertigungstechnische Vereinfachung ist dadurch möglich, dass der Absatz 44 durch einen in eine Nut des Pumpenkolbens 28 eingelegten Sprengring realisiert ist.

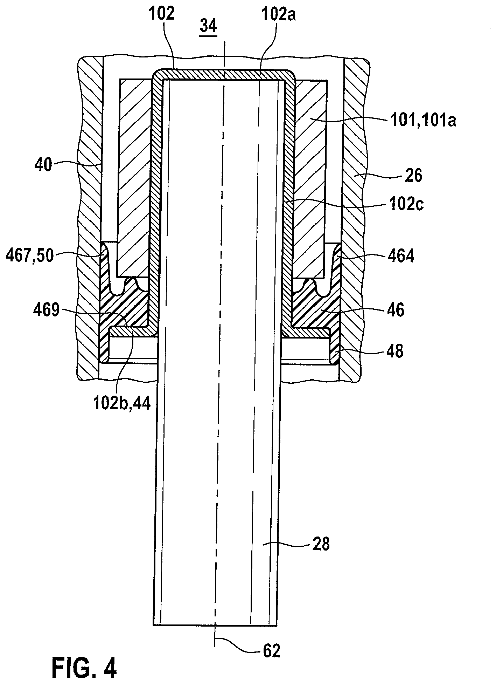

Eine nochmals andere diesbezügliche Lösung zeigt die Figur 4: Hierbei ist ein hutförmiges Halteelement 102 mit seiner Öffnung voran über das arbeitsraumseitige Ende des Pumpenkolbens 28 geschoben. Ein Boden 102a des Halteelements 102 kommt hierbei an der Stirnseite des Pumpenkolbens 28 axial zur Anlage, eine Seitenwand 102c des Halteelement 102 kommt radial an dem Pumpenkolben 28 zur Anlage. Eine dem Boden 102a des Halteelements 102 axial gegenüberliegende Krempe 102 b des Halteelements 102 ist radial abgespreizt und bildet insofern einen Absatz 44 aus.

Wie in den in den Figuren 2 und 3 gezeigten Beispielen ist die Dichtung 46 an dem insofern funktionsgleich vorgesehenen Absatz 44 in Anlage.

Der Pumpenkolben 28 weist in diesem Beispiel entlang seiner gesamten Länge einen einheitlichen Durchmesser auf. Eine besonders einfache und kostengünstige Fertigung beispielsweise eine Bearbeitung des Pumpenkolbens 28 mittels Durchgangsschleifen, also mit ortsfester Schleifscheibe, ist auf diese Weise möglich.

In den in den Figuren 2, 3 und 4 gezeigten Ausführungsbespielen ist vorgesehen, dass die Dichtung 46 zumindest eine einstückig angeformte Noppe 461 aufweist, die in eine axiale Richtung weist, und dass die Dichtung 46 über die zumindest eine Noppe 461 axial anliegt. Beispielhaft weisen die Dichtungen 46 in diesen Beispielen sogar jeweils mehrere Noppen 461 auf, die in Richtung des Arbeitsraums 34 weisen, und über die die Dichtung 46 an der Kappe 101 anliegt und hierdurch axial vorgespannt ist. Die Noppen 461 weisen in diesem Beispiel eine halbkugelige Gestalt auf. Alternativ könnten sie auch kegelig oder kegelstumpfförmig sein. Die Noppen 461 haben zum Beispiel einen Durchmesser von etwa 0,6mm, etwa 10% des Durchmessers der Dichtung 46 und eine Höhe von etwa 0,3mm, etwa 10% der Höhe der Dichtung 46.

Wenngleich die Kappe 101 an den Noppen 461 unter Spannung anliegt, ist die resultierende Verformung der Noppen 461 doch so vergleichsweise gering, dass ein Anliegen der Kappe 101 an einem Bereich der Dichtung 46, der in Umfangsrichtung zwischen den Noppen 461 liegt, unterbleibt.

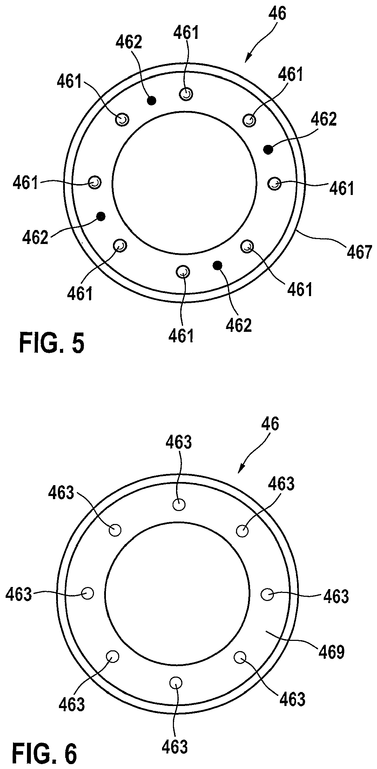

Die Dichtung 46 ist in Figur 5 in Aufsicht, mit Bezug auf die Figuren 2, 3 und 4 von oben, gezeigt. Es wird erkennbar, dass insgesamt 8 einstückig an die Dichtung 46 angeformte Noppen 461 in Richtung des Arbeitsraums 34 weisen, die auf einem gedachten Kreisring um die Kolbenachse 62 angeordnet sind und die zueinander in Umfangsrichtung jeweils um 45° beabstandet sind.

Selbstverständlich könnten die Noppen 461 zusätzlich oder alternativ auch auf der axial gegenüberliegenden Seite der Dichtung 46, an dem Absatz 44, ansonsten unverändert ausgebildet sein.

Die Dichtung 46 besteht in diesen Beispielen aus dem faserverstärkten thermoplastischen Material PEEK 150CA30 oder PA66CF20 und ist mittels Spritzguss hergestellt. Über die nachfolgend erläuterte Spritzgusstechnik, insbesondere die Anordnung der Anspritzpunkte 462 und der Entlüftungspunkte 463, kann erreicht werden, dass die Ausrichtung der Fasern ungeordnet ist.

Hierbei erfolgt der Spritzguss über Anspritzpunkte 462, die in der Figur 5 zu sehen sind, mit den Noppen 461 auf einer gemeinsamen gedachten Kreislinie liegen und um 90° in Umfangsrichtung voneinander beabstandet sind. Die Anspritzpunkte 462 erscheinen am gefertigten Produkt beispielsweise als kleine ringförmige oder sichelförmige Grate oder als kleine Warzen. Die Anspritzpunkte haben einen Durchmesser von oder von nicht mehr als 0,9mm.

Der Spritzguss erfolgt ferner über Entlüftungspunkte 463 die auf der axial gegenüberliegenden Seite der Dichtung 46, in den Figuren 2, 3 und 4 unten angeordnet sind. Sie sind in der Figur 6 zu sehen. Vorliegend sind 8 Entlüftungspunkte 463 vorgesehen, die auf einer gedachten Kreislinie liegen und um 45° in Umfangsrichtung voneinander beabstandet sind. Die Entlüftungspunkte 463 haben einen Durchmesser von oder von nicht mehr als 0,7mm und erscheinen am gefertigten Produkt beispielsweise als kleine Kavitäten.

Es kann vorgesehen sein, dass Anspritzpunkte 462 und Entlüftungspunkte 463 stets in Umfangsrichtung zueinander versetzt angeordnet sind. Auf diese Weise erfolgt eine verbesserte Durchmischung des verflüssigten Spritzgussmaterials in der Spritzgussform und eine Vermeidung einer gerichteten Ausrichtung der Fasern und eine Vermeidung anisotroper Materialeigenschaften der Dichtung 46.

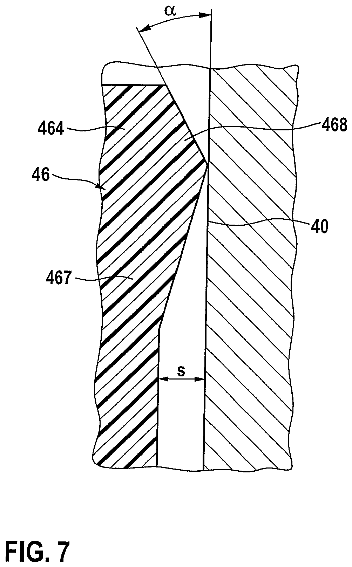

Ein axialer Endbereich 464 der Dichtung 46 ist vorliegend arbeitsraumseitig an der Dichtlippe 467 ausgebildet. Ein entsprechend nochmals vergrößerter Ausschnitt der Dichtung 46 ist in der Figur 7 dargestellt.

Es ist vorgesehen, dass eine radial außen liegende Fläche der Dichtung 46, die einer Innenfläche des Pumpenzylinder 40 gegenüberliegt, in einem axialen Endbereich 464 der Dichtung 46 unter einem Winkel α von 10° bis 60° zur Innenwand des Pumpenzylinders 40 radial nach innen geneigt ist. Dies hat zur Wirkung oder alternativ ist vorgesehen, dass eine Relativbewegung zwischen Pumpenzylinder 40 und Pumpenkolben 28 in axialer Richtung, insbesondere in Richtung auf den Arbeitsraum 34 zu, ein Abheben der Dichtung 46 von dem Pumpenzylinder 28 in eine radial nach innen weisende Richtung begünstigt. In diesem Fall bildet sich zwischen Dichtung 46 und Pumpenzylinder 40 ein aus Kraftstoff bestehender Flüssigkeitsfilm aus, der bei geringfügiger Leckage den Verschleiß der Kolben-Kraftstoffpumpe 18 erheblich vermindert.

Zu diesem Zweck ist an bzw. auf der Dichtlippe 467 ein nach außen weisender, umlaufender Steg 468 einstückig angeformt, der im Querschnitt in Längsrichtung etwa die Form eines gleichschenkligen Dreiecks aufweist, von dem die zwei gegenüberliegenden spitze Ecken in axiale Richtungen weisen und dessen dritte stumpfe Ecke an dem Pumpenzylinder 40 (statisch) anliegt. Es ist vorgesehen, dass lediglich dieser Steg (statisch) an dem Pumpenzylinder 40 zur Anlage kommt, während die Dichtung 46 bzw. die Dichtlippe 467 im Übrigen durch einen Spalt von dem Pumpenzylinder 40 beabstandet ist. Eine Breite s des Spalts beträgt beispielsweise 20µm. Bei Relativbewegung ist, wie oben geschildert, ferner auch ein Abheben des Stegs 468 von dem Pumpenzylinder 40 vorgesehen.

## Patentansprüche

1. Kolben-Kraftstoffpumpe (18) für eine Brennkraftmaschine mit einem Pumpenzylinder (40) und einem im Pumpenzylinder (40) axial verschiebbaren Pumpenkolben (28), **dadurch gekennzeichnet, dass** die Kolben-Kraftstoffpumpe (18) eine am Umfang des Pumpenkolbens (28) angeordnete Dichtung (46) mit ringförmiger Grundstruktur aufweist, die mittels Spritzguss mit axialer Anspritzrichtung hergestellt ist, und dass mehrere Anspritzpunkte (462) auf einer axialen Seite der Dichtung (46) vorgesehen sind und dass zumindest ein Entlüftungspunkt (463) auf der gegenüberliegenden axialen Seite der Dichtung (46) in Umfangsrichtung zwischen den Anspritzpunkten vorgesehen ist.

2. Kolben-Kraftstoffpumpe (18) nach Anspruch 1, **dadurch gekennzeichnet, dass** mehrere Anspritzpunkte (462) auf einer axialen Seite der Dichtung (46) vorgesehen sind und dass mehrere Entlüftungspunkt (463) auf der gegenüberliegenden axialen Seite der Dichtung (46) vorgesehen sind und dass die Entlüftungspunkte (463) zu den Anspritzpunkten (462) stets in Umfangsrichtung versetzt angeordnet sind.

3. Kolben-Kraftstoffpumpe (18) nach einem der vorangehenden Ansprüche, **dadurch gekennzeichnet, dass** mehrere Anspritzpunkte (462) auf einer axialen Seite der Dichtung (46) vorgesehen sind und dass mehrere Entlüftungspunkte (463) auf der gegenüberliegenden axialen Seite der Dichtung (46) vorgesehen sind und dass die Entlüftungspunkte (463) zu jeweils zwei benachbarten Anspritzpunkten (462) stets in Umfangsrichtung etwa mittig angeordnet sind.

4. Kolben-Kraftstoffpumpe (18) nach einem der vorangehenden Ansprüche **dadurch gekennzeichnet, dass** die Anspritzpunkte (462) und/oder die Entlüftungspunkte (463) lokal unebene Strukturen sind.

5. Kolben-Kraftstoffpumpe (18) nach einem der vorangehenden Ansprüche, **dadurch gekennzeichnet, dass** die Dichtung (46) ein faserverstärktes thermoplastisches Material, insbesondere PEEK, aufweist.

6. Kolben-Kraftstoffpumpe (18) nach Anspruch 5, **dadurch gekennzeichnet, dass** die Fasern in dem faserverstärkten thermoplastischen Material anisotrop ausgerichtet sind.

7. Kolben-Kraftstoffpumpe (18) nach Anspruch 5 oder 6, **dadurch gekennzeichnet, dass** die Fasern in dem faserverstärkten thermoplastischen Material eine mittlere Länge von mindestens 100µm aufweisen.

8. Kolben-Kraftstoffpumpe (18) nach einem der Ansprüche 5 bis 7, **dadurch gekennzeichnet, dass** die Fasern Carbon aufweisen oder aus Carbon bestehen.

## Claims

1. Piston fuel pump (18) for an internal combustion engine having a pump cylinder (40) and a pump piston (28) which can be displaced axially in the pump cylinder (40), **characterized in that** Piston fuel pump (18) has a seal (46) having an annular basic structure, which seal is arranged on the circumference of the pump piston (28) and is produced by means of injection molding with an axial injection direction, and **in that** a plurality of injection points (462) are provided on an axial side of the seal (46), and **in that** at least one venting point (463) is provided on the opposite axial side of the seal (46) between the injection points in the circumferential direction.

2. Piston fuel pump (18) according to Claim 1, **characterized in that** a plurality of injection points (462) are provided on an axial side of the seal (46), and **in that** a plurality of venting points (463) are provided on the opposite axial side of the seal (46), and **in that** the venting points (463) are always offset in the circumferential direction with respect to the injection points (462).

3. Piston fuel pump (18) according to one of the preceding claims, **characterized in that** a plurality of injection points (462) are provided on an axial side of the seal (46), and **in that** a plurality of venting points (463) are provided on the opposite axial side of the seal (46), and **in that** the venting points (463) are always arranged approximately centrally in the circumferential direction with respect to in each case two adjacent injection points (462).

4. Piston fuel pump (18) according to one of the preceding claims, **characterized in that** the injection points (462) and/or the venting points (463) are locally uneven structures.

5. Piston fuel pump (18) according to one of the preceding claims, **characterized in that** the seal (46) has a fibre-reinforced thermoplastic material, in particular PEEK.

6. Piston fuel pump (18) according to Claim 5, **characterized in that** the fibres in the fibre-reinforced thermoplastic material are oriented anisotropically.

7. Piston fuel pump (18) according to Claim 5 or 6, **characterized in that** the fibres in the fibre-reinforced thermoplastic material have a mean length of at least 100 µm.

8. Piston fuel pump (18) according to one of Claims 5 to 7, **characterized in that** the fibres have carbon or consist of carbon.

## Revendications

1. Pompe à carburant à piston (18) pour un moteur à combustion interne, comprenant un cylindre de pompe (40) et un piston de pompe (28) déplaçable axialement dans le cylindre de pompe (40),
**caractérisée en ce que** la pompe à carburant à piston (18) présente un joint d'étanchéité (46) ayant une structure de base de forme annulaire, disposé au niveau de la périphérie du piston de pompe (28), qui est fabriqué par moulage par injection avec une direction d'injection axiale, et **en ce que** plusieurs points d'injection (462) sont prévus sur un côté axial du joint d'étanchéité (46) et **en ce qu'**au moins un point de désaérage (463) est prévu sur le côté axial opposé du joint d'étanchéité (46) dans la direction périphérique entre les points d'injection.

2. Pompe à carburant à piston (18) selon la revendication 1,
**caractérisée en ce que** plusieurs points d'injection (462) sont prévus sur un côté axial du joint d'étanchéité (46) et **en ce que** plusieurs points de désaérage (463) sont prévus sur le côté axial opposé du joint d'étanchéité (46) et **en ce que** les points de désaérage (463) sont toujours disposés de manière décalée dans la direction périphérique par rapport aux points d'injection (462).

3. Pompe à carburant à piston (18) selon l'une quelconque des revendications précédentes,
**caractérisée en ce que** plusieurs points d'injection (462) sont prévus sur un côté axial du joint d'étanchéité (46) et **en ce que** plusieurs points de désaérage (463) sont prévus sur le côté axial opposé du joint d'étanchéité (46) et **en ce que** les points de désaérage (463) sont disposés approximativement centralement toujours dans la direction périphérique par rapport aux deux points d'injection adjacents respectifs (462).

4. Pompe à carburant à piston (18) selon l'une quelconque des revendications précédentes,
**caractérisée en ce que** les points d'injection (462) et/ou les points de désaérage (463) sont des structures localement irrégulières.

5. Pompe à carburant à piston (18) selon l'une quelconque des revendications précédentes,
**caractérisée en ce que** le joint d'étanchéité (46) présente un matériau thermoplastique renforcé par des fibres, en particulier du PEEK.

6. Pompe à carburant à piston (18) selon la revendication 5, **caractérisée en ce que** les fibres dans le matériau thermoplastique renforcé par des fibres sont orientées de manière anisotrope.

7. Pompe à carburant à piston (18) selon la revendication 5 ou 6, **caractérisée en ce que** les fibres dans le matériau thermoplastique renforcé par des fibres présentent une longueur moyenne d'au moins 100 µm.

8. Pompe à carburant à piston (18) selon l'une quelconque des revendications 5 à 7, **caractérisée en ce que** les fibres présentent du carbone ou se composent de carbone.
